# EUROPEAN PATENT APPLICATION

(11) **EP 4 649 864 A1**
(43) Date of publication of application: **19.11.2025**
(21) Application number: 24731452.9
(22) Date of filing: 23.04.2024
(51) Int. Cl.: A47C 7/62, A47C 17/86

(54) **KNOB-TYPE MANUAL CONTROLLER**

(30) Priority: 21.03.2024 CN 202420562064 U
(71) Applicant: Dongguan Rongma Furniture Co., Ltd, Dongguan, Guangdong 523960 (CN)
(72) Inventor: LIU, Liang, Dongguan, Guangdong 523960 (CN)
(74) Representative: Vitina, Maruta
(86) International application number: PCT/CN2024/089247
(87) International publication number: WO 2025/194551

(57) **Abstract**

A knob-type controller, including a main body. A knob, a reset key, a universal serial bus (USB) port and a microphone are provided on a surface of the main body. The knob is vertically and rotatably connected to the main body. A main control board and at least one encoder mounted on the main control board are provided in the hand main body. The knob extends downward, and is provided with at least one rotating wheel. The at least one rotating wheel is engaged with an output shaft of the at least one encoder. A control instruction is input through the knob or the microphone, and transmitted to a specific execution component in furniture through the main control board to realize furniture control, resulting in diversified control means.

## Description

### CROSS-REFERENCE TO RELATED APPLICATIONS

This application claims the benefit of priority from Chinese Patent Application No. 202420562064.X, filed on March 21, 2024 and titled "KNOB-TYPE CONTROLLER". The content of the aforementioned application, including any intervening amendments thereto, is incorporated herein by reference in its entirety.

### TECHNICAL FIELD

This application relates to furniture control, and more particularly to a knob-type controller.

### BACKGROUND

Most of furniture such as sofas and chairs are equipped with the function of adjusting the lumbar support, hand rest and leg rest to adapt to different usage requirements. For convenience of use, furniture products such as self-adjusting sofas and self-adjusting chairs have been introduced, which adopt motors as power sources, and are adjusted by controlling mechanical devices through control boxes. However, existing control boxes commonly are commonly available with a single control mode and lack of the reset key. If the furniture needs to be adjusted back to its original state, each component needs to be manually adjusted back in turn, resulting in a long adjustment time and failure to meet the usage requirements.

For example, Chinese Patent No. 219978760U disclosed a wireless controller for a liftable device, which includes a main body of a controller. A control circuit board with a wireless communication module is provided inside the main body of the controller. The liftable device is provided with a communication module accordingly. The control circuit board is configured to be communicated with the liftable device. A control knob is provided on the main body of the controller, and is fixedly connected to a knob connector. The knob connector is connected to an encoder. The encoder is electrically connected to the control circuit board, and is configured to convert angular displacement and linear displacement into electrical signals. The control knob is configured to be rotated or pressed to provide angular displacement or linear displacement to the encoder. Such controller has a single control mode and lacks the reset key. If the furniture needs to be adjusted back to its original state, each component needs to be manually adjusted back in turn, resulting in a long adjustment time and failure to meet the usage requirements.

### SUMMARY

An object of the disclosure is to provide a knob-type controller, so as to at least overcome the technical problems in the prior art that the existing control box is commonly available with a single control mode and lack of a reset key, and requires manual adjustment of each component in sequence when the furniture needs to be adjusted back to its original state, resulting in a long adjustment time and failure to meet the usage requirements.

In order to achieve the above object, the following technical solutions are adopted.

This application provides a knob-type controller, comprising:
a main body;
wherein a knob, a reset key, a universal serial bus (USB) port and a microphone are provided on a surface of the main body; the knob is vertically and rotatably connected to the main body; a main control board and at least one encoder mounted on the main control board are provided in the main body; the knob extends downward, and is provided with at least one rotating wheel; and the at least one rotating wheel is engaged with an output shaft of the at least one encoder.

In some embodiments, the number of the at least one encoder is at least two; and an output shaft of each of at least two encoders is provided with a gear, and gears of the at least two encoders vary in height.

In some embodiments, the at least one rotating wheel is coaxially arranged with the knob, an inner side and an outer side of the at least one rotating wheel are each provided with a gear ring engaged with the gears.

In some embodiments, the reset key comprises a key cap and a key shaft; the key shaft is electrically connected to the main control board; and the key cap is configured to drive the key shaft.

In some embodiments, the main control board is further provided with a voice module; the voice module is connected to the microphone through a connecting wire; and a sound receiving hole is provided at the surface of the main body.

In some embodiments, the main control board is further provided with an input module; and the input module is connected to the USB port through a connecting wire.

The technical solutions described above of the knob-type controller in this application have at least one of the following technical effects.

When using the knob-type controller, a control instruction is input through the knob or the microphone, and transmitted to a specific execution component in the furniture through the main control board to realize furniture control, resulting in diversified control means. A reset instruction is input through the reset key, and transmitted to the specific execution component in the furniture through the main control board to execute reset. The knob-type controller can be connected to a user's smartphone through the USB port. When using the knob for control, the furniture can be controlled by turning the knob to allow the rotating wheel to drive the encoder to rotate.

### BRIEF DESCRIPTION OF THE DRAWINGS

Fig. 1 is a schematic structural diagram of a knob-type controller in accordance with an embodiment of the present disclosure;
Fig. 2 is a sectional view of the knob-type controller in accordance with an embodiment of the present disclosure; and
Fig. 3 is a sectional view of another knob-type controller in accordance with an embodiment of the present disclosure.

In the drawings: 1-main body; 11-knob; 12-reset key; 121-key cap; 122-key shaft; 13-universal serial bus (USB) port; 14-microphone; 15-sound receiving hole; 2-main control board; 21-encoder; 22-gear; 23-voice module; 24-input module; and 3-rotating wheel.

### DETAILED DESCRIPTION OF EMBODIMENTS

The technical solutions of the present disclosure will be described below in conjunction with the accompanying drawings and embodiments. The same or similar reference signs throughout the drawings represent the same or similar elements or elements with the same or similar functions. The embodiments described below with reference to the drawings are illustrative for explaining the present disclosure, and are not intended to limit the present disclosure.

In the description of the embodiments, it should be understood that orientation or positional relationships related to orientation descriptions, such as "length", "width", "up", "down", "front", "back", "left", "right", "vertical", "horizontal", "top", "bottom", "inside" and "outside", are based on orientation or position relationships shown in the drawings, which are merely intended to facilitate the description of the embodiments and simplify the description, and are not intended to indicate or imply that a device or element referred to must have a specific orientation, be constructed and operated in a specific orientation. Therefore, these orientation or positional relationships cannot be construed as limiting the present disclosure.

In addition, terms such as "first" and "second" are only used to distinguish technical features, and are not intended to indicate or imply the relative importance or implicitly indicate the number of indicated technical features. Therefore, the feature limited by "first" or "second" may explicitly or implicitly include one or more such features. In the description of the embodiments, "a plurality of" means two or more, unless otherwise clearly and specifically defined.

In the embodiments of the present disclosure, unless otherwise clearly specified and defined, terms such as "mount", "communicate", "connect" and "fix" should be understood in a broad sense. For example, it can be a fixed connection, a detachable connection, or an integrated connection; it can be a mechanical connection or an electrical connection; it can be a direct connection or an indirect connection through an intermediate medium, it can be an internal connection of two elements or an interaction relationship between two elements. For those of ordinary skill in the art, the specific meanings of the above terms in the present disclosure can be understood according to specific circumstances.

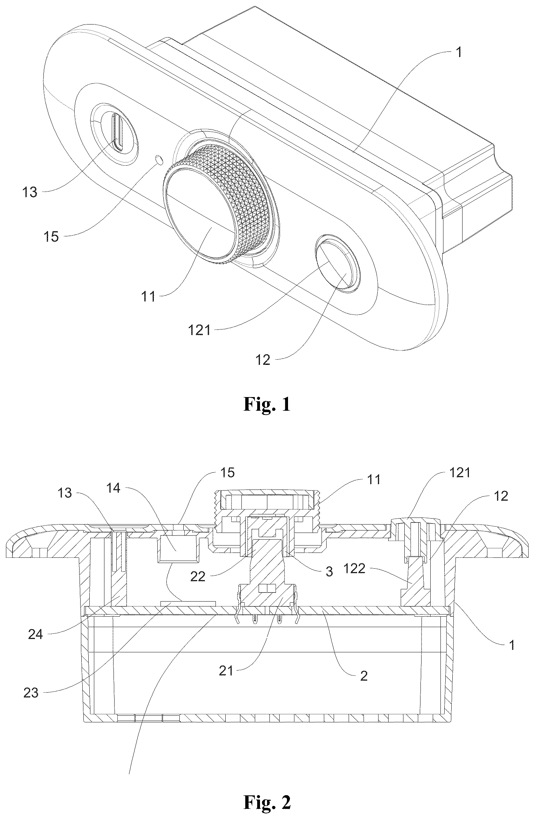

In an embodiment, as shown in Figs. 1-2, a knob-type controller is provided, including a main body 1. A knob 11, a reset key 12, a universal serial bus (USB) port 13 and a microphone 14 are provided on a surface of the main body 1. A main control board 2 and at least one encoder 21 mounted on the main control board 2 are provided in the main body 1. The knob 11 extends downward, and is provided with at least one rotating wheel 3. The at least one rotating wheel 3 is engaged with an output shaft of the at least one encoder 21.

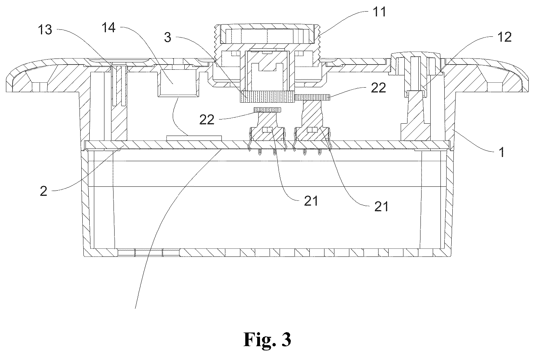

In another embodiment, as shown in Fig. 3, at least two encoders 21 are provided in the main body 1. An output shaft of each of the at least two encoders 21 is provided with a gear 22, and gears 22 of the at least two encoders 21 vary in height. Specifically, the knob 11 can be configured to move up and down and rotate relative to the surface of the main body 1. The at least one rotating wheel 3 can be switched to engage with different gears 22 for transmission through the up and down movement of the knob 11, so as to realize the rotation of different encoders 21, resulting in diversified operation modes.

Furthermore, the at least one rotating wheel 3 is coaxially arranged with the knob 11. An inner side and an outer side of the at least one rotating wheel 3 are each provided with a gear ring engaged with the gears 22. Specifically, the knob 11 can be directly rotated, such that the gear ring at the inner side of the at least one rotating wheel 3 can be engaged with a gear 22 of one encoder 21 for transmission. When the knob 11 is operated for mode switching, the knob 11 is pressed downward such that the gear ring at the outer side of the at least one rotating wheel 3 can be engaged with a gear 22 of another encoder 21 for transmission, thereby realizing mode switching.

In such embodiments, as shown in Figs. 1-3, the reset key 12 includes a key cap 121 and a key shaft 122. The key shaft 122 is electrically connected to the main control board 2. The key cap 121 is configured to drive the key shaft 122. Specifically, during resetting, the key cap 121 is pressed downward to drive the key shaft 122 to input a reset signal to the main control board 2, and the reset signal is transmitted by the main control board 2 to a specific execution component in the furniture to execute the reset.

Furthermore, the main control board 2 is further provided with a voice module 23. The voice module 23 is connected to the microphone 14 through a first connecting wire. A sound receiving hole 15 is provided on the surface of the main body. Specifically, when performing voice control by a user, a wake-up voice is spoken, and then a function instruction voice is spoken and subsequently processed by the voice module 23, such that the instruction is transmitted to the specific execution component of the furniture through the main control board 2.

Furthermore, the main control board 2 is further provided with an input module 24. The input module 24 is connected to the USB port 13 through a second connecting wire.

### Operation principle

When in use, a control instruction is input through the knob 11 or the microphone 14. A lumbar support, a leg support and a hand support of the furniture are configured as specific execution components provided with adjusting motors. The control instruction is transmitted to the specific execution components in the furniture through the main control board 2 to realize furniture control. A reset instruction is input through the reset key 12, and transmitted to the specific execution components in the furniture through the main control board 2 to perform the reset. The knob-type controller can be connected to a user's smartphone through the USB port 13. When using the knob for control, the furniture can be controlled by rotating the knob 11 to allow the rotating wheel 3 to drive the encoder 21 to rotate. When the knob 11 is rotated slowly, the specific execution components can be fine-tuned in angle through the adjusting motors. When the knob 11 is rotated rapidly, the adjusting motors operate continuously. When the angle is adjusted to a suitable level, the reset key 12 is pressed briefly to input a stop instruction to the adjusting motors. When resetting, the adjusting motors can be reset by pressing the reset key 12 for 3 s.

The embodiments described above are merely illustrative of the present disclosure, and are not intended to limit the scope of the present disclosure. It should be understood that various changes or substitutions made by those of ordinary skill in the art without departing from the spirit of the present disclosure shall fall within the scope of the present disclosure defined by the appended claims.

## Claims

1. A knob-type controller, comprising:
a main body;
**characterized in that** a knob, a reset key, a universal serial bus (USB) port and a microphone are provided on a surface of the main body; the knob is vertically and rotatably connected to the main body; a main control board and at least one encoder mounted on the main control board are provided in the main body; the knob extends downward, and is provided with at least one rotating wheel; and the at least one rotating wheel is engaged with an output shaft of the at least one encoder.

2. The knob-type controller according to claim 1, **characterized in that** the number of the at least one encoder is at least two; and an output shaft of each of at least two encoders is provided with a gear, and gears of the at least two encoders vary in height.

3. The knob-type controller according to claim 2, **characterized in that** the at least one rotating wheel is coaxially arranged with the knob, an inner side and an outer side of the at least one rotating wheel are each provided with a gear ring engaged with the gears.

4. The knob-type controller according to claim 1, **characterized in that** the reset key comprises a key cap and a key shaft; the key shaft is electrically connected to the main control board; and the key cap is configured to drive the key shaft.

5. The knob-type controller according to claim 1, **characterized in that** the main control board is further provided with a voice module; the voice module is connected to the microphone through a connecting wire; and a sound receiving hole is provided at the surface of the main body.

6. The knob-type controller according to claim 1, **characterized in that** the main control board is further provided with an input module; and the input module is connected to the USB port through a connecting wire.
